# EUROPEAN PATENT SPECIFICATION

(11) **EP 2 620 359 B1**
(45) Date of publication and mention of the grant of the patent: **01.04.2015**
(21) Application number: 12152220.5
(22) Date of filing: 24.01.2012
(51) Int. Cl.: B63H 5/08

(54) **System and method for starting an electric motor of a propulsion unit**
System und Verfahren zum Starten eines Elektromotors einer Antriebseinheit
Système et procédé pour démarrer un moteur électrique d'une unité de propulsion

(43) Date of publication of application: 31.07.2013
(73) Proprietor: ABB Oy, 00380 Helsinki (FI)
(72) Inventor: Kanerva, Sami, 01690 Vantaa (FI); Kajava, Mikko, 00990 Helsinki (FI); Kokkila, Kimmo, 00530 Helsinki (FI)
(74) Representative: Boco IP Oy Ab

(56) References cited:
- DE-A1- 3 207 398
- GB-A- 158 238

## Description

### TECHNICAL FIELD

The invention relates to a system according to the preamble of claim 1.

The invention also relates to a method according to the preamble of claim 7.

The system comprises a main engine driving a first main propeller and a generator, an excitation circuit controlling the generator, a propulsion unit comprising an electric motor and a second, contra-rotating propeller driven by the electric motor, an electric network connecting the generator and the electric motor, and a switch in the electric network making it possible to connect and disconnect the electric motor and the generator.

Such a system is used to drive large vessels such as e.g. passenger ships, passenger ferries, cargo ships, barges, oil tankers, ice breakers, off-shore ships and naval ships. Especially large cargo ships use such a driving system having two stationary, contra-rotating propellers. A system with a first main propeller and a second contra-rotating propeller will increase the overall efficiency in a large cargo ship with about 5-10% compared to a system using only a main propeller.

### BACKGROUND ART

DE patent publication 32 07 398 discloses a propulsion arrangement with a main engine driving a first main propeller and a propulsion unit comprising an electric motor driving a second contra-rotating propeller. The main engine is further driving a generator. The generator supplies electric energy via an electric network to the electric motor. This electric network may include a switch making it possible to connect and disconnect the electric motor and the generator. The main engine and thus the main propeller can be started first keeping the switch open. This means that the second propeller water mills freely in the water flow generated by the main propeller. Then at some later point when the second propeller has gained enough rotation speed in the flow of the first propeller the switch is closed and the electric motor starts driving the second propeller.

Starting of the electric motor when the rotor of the electric motor is already rotating in the flow of the first main propeller will at least to some extent reduce the start up current of the electric motor. Starting of the electric motor by simply closing the switch will, however, result in a rather uncontrolled start of the electric motor. The starting current might still be rather high as well as the needed starting torque. This has to be considered in the dimensioning of the system i.e. the switch, the generator and the motor. All these components have to withstand the direct on line start of the electric motor at said rotation speed.

### SUMMARY OF THE INVENTION

The object of the invention is to eliminate the disadvantages of prior art direct on line starting and to provide a novel solution for starting an electric motor of a propulsion unit.

The system according to the invention is characterized by the features in characterizing portion of claim 1.

The method according to the invention is characterized by the features in the characterizing portion of claim 7.

The system according to the invention comprises a control circuit controlling the excitation circuit, said control circuit receives as input signals at least the rotation speed and the voltage of the electric motor, whereby the control circuit calculates the torque of the electric motor and regulates continuously the excitation circuit in order to supply a voltage, which is lower than the nominal voltage, to the electric motor during the start up procedure.

By regulating the excitation current of the generator to a small value, the voltage of the generator will be small compared to the nominal voltage of the generator. A small voltage supplied by the generator to the electric motor will result in a small current at the electric motor. A small current at the electric motor will result in a small torque at the electric motor. A small torque at the electric motor will result in a limited acceleration of the electric motor and thus a controlled and smooth start of the electric motor. The reduced voltage will reduce the current although there is not a linear relationship between the voltage and the current.

The system according to the invention makes it possible to start the electric motor of the propulsion unit in a controlled way. The controlled starting of the electric motor will reduce the over dimensioning of the system. The limitation of the voltage, the current and the torque of the electric motor during start up means that a smaller switch as well as a less robust generator and a less robust motor are needed in the system.

The controlled startup procedure of the motor will also reduce the risk of the over current protector tripping as the current of the electric motor is controlled and well beyond the tripping level during the start up procedure.

The controlled and smooth starting of the electric motor will also reduce the loads on the second propeller and the bearings of the second propeller connected to the electric motor.

### BRIEF DESCRIPTION OF THE DRAWINGS

Some specific embodiments of the invention are described in the following in detail with reference to the accompanying figures, in which:
Figure 1 shows the principal arrangement according to the invention
Figure 2 shows a graph of the torque and current as a function of the rotation speed of the motor
Figure 3 shows a graph of the rotation speed of the electric motor as a function of time during start up of the electric motor
Figure 4 shows a graph of the current of the electric motor as a function of time during start up of the electric motor.
Figures 5-9 show graphs of the torque and current as a function of the rotation speed of the motor during the startup procedure of the electric motor.

### DETAILED DESCRIPTION OF SPECIFIC EMBODIMENTS

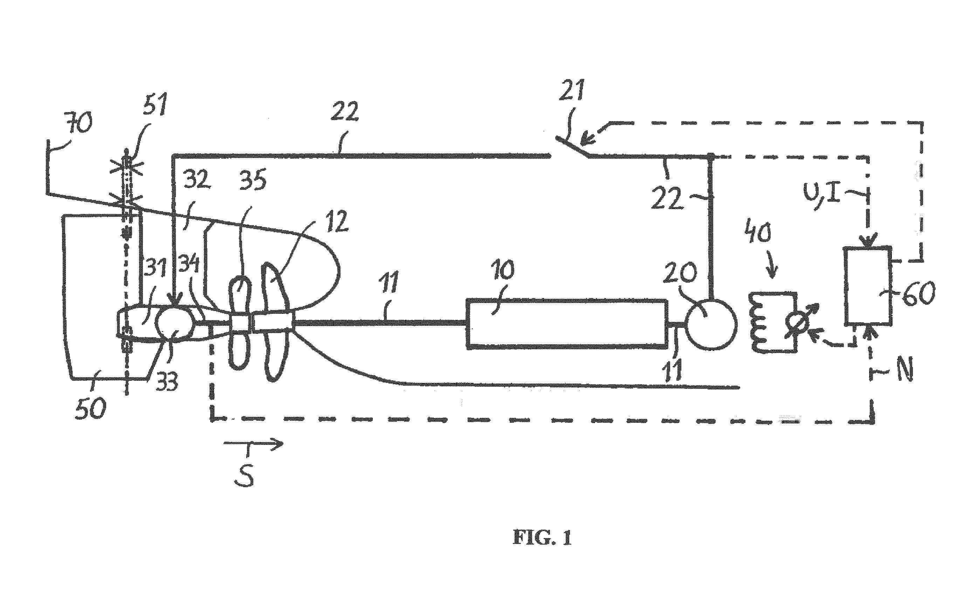

Figure 1 shows the principal arrangement according to the invention. The arrangement comprises a main engine 10 driving a first main propeller 12 and a generator 20. The arrangement further comprises a propulsion unit 30 connected to the hull 70 of the vessel. The first main propeller 12 as well as the generator 20 is connected with a first main shaft 11 to the main engine 10. The main propeller 12 and/or the generator 20 could naturally also be connected through gears to the main engine 10. The first main shaft 11 extends outside the hull 70 of the vessel through a watertight sealed opening. The first main propeller 12 is connected to the first main shaft 11 outside the hull 70 of the vessel at the aft of the vessel.

The propulsion unit 30 comprises a chamber 31, a hollow connection piece 31 connecting the propulsion unit 30 to the hull 70 of the vessel, an electric motor 33 within the chamber 31, a second shaft 34 connected to the rotor of the electric motor 33 and a second contra-rotating propeller 35 connected to the second shaft 34. The second propeller 35 is located after the first main propeller 12 in the driving direction S of the vessel. The main propeller 12 and the second propeller 35 are advantageously also co-centric. The electric motor 33 can be an induction motor or a synchronous motor. The propulsion unit 30 is fixed to the hull 70 of the vessel with the connection piece 31. This means that the propellers 12 and 35 will remain in a fixed position in relation to each other and in relation the hull 70 of the vessel all the time.

The steering of the vessel is done by a separate rudder 50, which is connected to the hull 70 of the vessel trough and axis 51. A steering mechanism, which is not shown in the figure, rotates the axis 51 and in this way also the rudder 50 based on the commands from the navigation bridge.

The generator 20 provides electric power to the electric motor 33 through an electric network 22. There is further a switch 21 in the electric network 22. The generator 20 and the electric motor 33 can thus be connected and disconnected with the switch 22.

The generator 20 is further provided with an excitation circuit 40 for controlling the output of the generator 20. The excitation circuit 40 regulates the exciting current to the generator 20 and in this way the output voltage of the generator 20.

The arrangement further comprises a control circuit 60 for controlling the excitation circuit 40. The control circuit 60 receives as measurement signals at least the rotation speed N and the voltage U of the electric motor 33. The control circuit 60 calculates the torque T of the electric motor 33 based on the measured values rotation speed N and the voltage U. This calculation of the torque T can be done based on the equivalent circuit of the electric motor with standard methods known to a person skilled in the art.

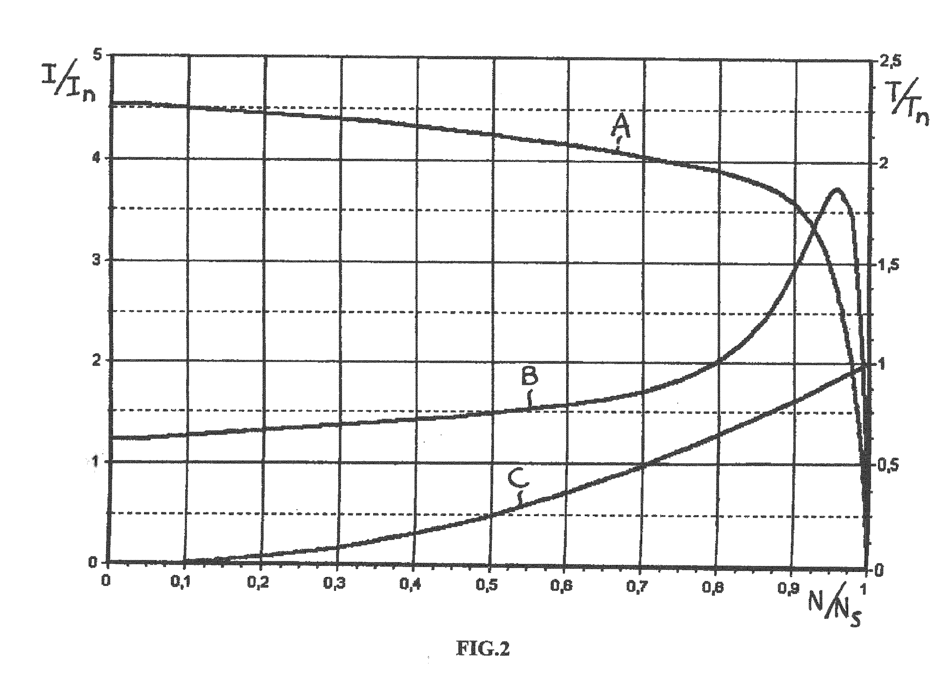

Figure 2 shows a graph of the torque and current as a function of the rotation speed of the motor. The graph A shows the current I/In, the graph B shows the torque T/Tn and the graph C shows the torque of the load on the shaft of the electric motor 33 as a function of the rotation speed N/Ns of the electric motor 33. The idea is to lower the graph B representing the torque of the electric motor 33 and in this way also the graph A representing the current of the electric motor 33 during start up of the electric motor 33. During water milling the torque of the electric motor 33 is zero as the second propeller 35 rotates freely in the flow of the main propeller 12. As the electric motor 33 is accelerated the torque increases rapidly, i.e. at a small increase in speed to the level of the load torque curve of the second propeller. The difference in the torque between the electric motor 33 and the second propeller 35 is either a accelerating torque or a retarding torque and when said torques are equal then the speed of the electric motor 33 is at a constant level.

The mechanical equation of a rotating motion is: T(M)-T(L)=J*(d• /dt), where
- T(M): is the torque of the electric motor
- T(L): is the torque of the load
- J: is the inertia mass of the system
- •: is the angular velocity

The electric motor 33 will be started at a point when the second propeller 35 has reached a predetermined start up speed when it is rotating freely in the flow of the first main propeller 12. The first main propeller 12 creates a flow and said flow causes the second propeller 35 to rotate freely in said flow. The second propeller 35 will after some time always reach a steady state rotation speed i.e. a natural water milling speed, which is proportional to the rotation speed of the first main propeller 12 when the rotation speed of the first main propeller 12 changes. The predetermined start up speed of the second propeller 35 is ± 10% of the natural water milling speed of the second propeller 35. This natural water milling speed of the second propeller 35 is dependent on the design of the first main propeller 12 and the second propeller 35. Said natural water milling speed is thus specific for each vessel and it is normally in the range of 50 to 70% of the synchronous speed of the electric motor 33. The synchronous speed of the electric motor 33 depends on the rotation speed of the generator 20 and thus the rotation speed of the main engine 10. The start up current and the duration of the start up current will be limited to some extent due to the fact that the rotor in the electric motor 33 is already rotating when the start of the electric motor 33 takes place.

The control unit 60 takes care of a controlled start up of the electric motor. The control circuit 60 calculates the torque T of the electric motor 33 based on the measured values i.e. the rotation speed N and the voltage U of the electric motor 33 and regulates the current of the excitation circuit 40 during start up of the electric motor 33 so that the voltage U and thereby the current I and thereby the torque T of the electric motor 33 does not exceed predetermined values during start up. The control of the torque T will also control the acceleration of the electric motor 33 during start up.

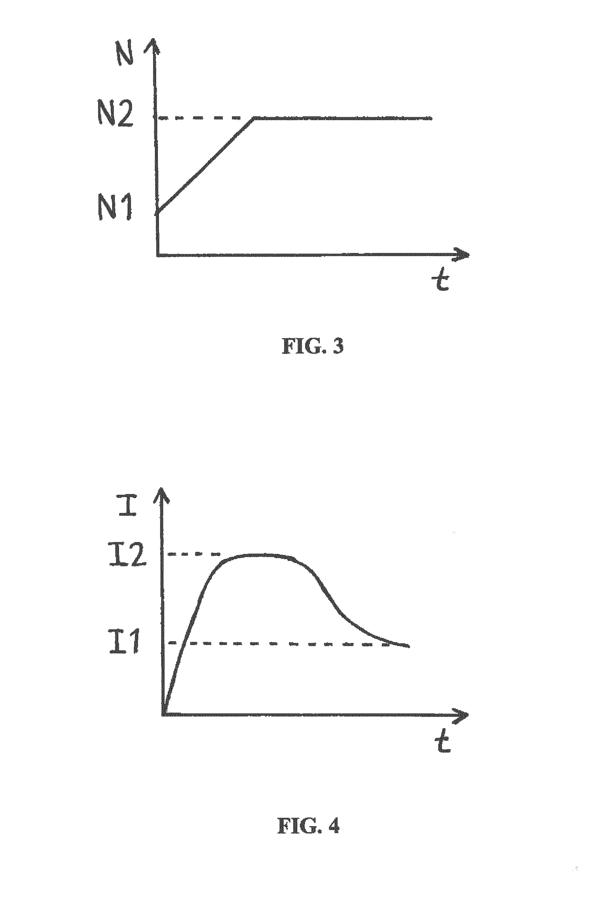

Figure 3 shows a graph of the rotation speed of the electric motor as a function of time during start up of the electric motor. The rotation speed N1 refers to the speed of the electric motor 33 when it is water milling freely in the flow of the first main propeller 12 before the start of the electric motor 33. The rotation speed N2 refers to the steady state rotation speed of the electric motor 33 after start up. The control circuit 60 controls the current of the excitation circuit 40 so that the voltage U and thereby the current I and thereby the torque T and thereby the acceleration of the motor 33 during start up is limited according to the ramp in the figure.

Figure 4 shows a graph of the current of the electric motor as a function of time during start up of the electric motor. The current 11 refers to the steady state current of the electric motor 33 when it is running at the steady state rotation speed after start up. The current 12 refers to the maximum current which the electric motor 33 takes during start up. The control circuit 60 controls the excitation circuit 40 so that the voltage U and thereby the current I and thereby the torque T and thereby the acceleration of the motor 33 is limited during start up so that the value 12 of the current I is not exceeded during start up as shown in the graph in the figure.

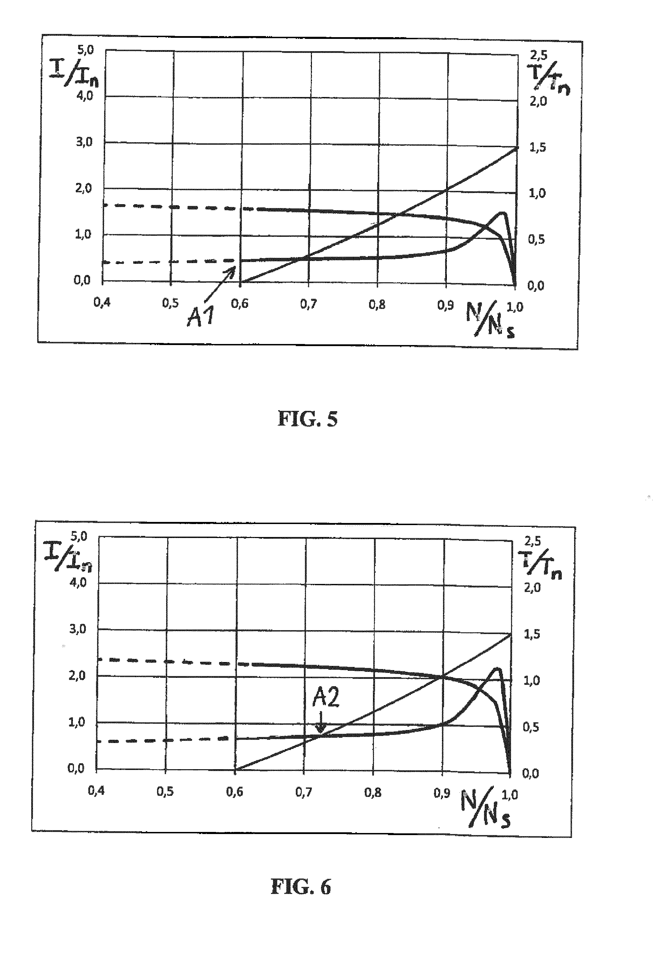

Figures 5-10 show graphs of the torque and current as a function of the rotation speed of the motor during the startup procedure of the electric motor. These figures describe the principal of the whole start up procedure of the electric motor.

At point A1 in figure 5 the electric motor 33 rotates freely in the water flow of the main propeller 12. The rotation speed of the electric motor 33 is approximately 60% of the synchronous speed of the electric motor 33. The generator 20 rotates with the main shaft 11 without excitation, i.e. the voltage U is zero. When the switch 21 is closed, the electric motor 33 does not produce any torque and the system remains in the initial state. The speed of the electric motor 33 increases according to the water milling curve until the torque of the electric motor 33 exceeds the steady state second propeller 35 torque.

At point A2 in figure 6 the voltage is slightly increased by the generator 20 excitation 40. The electric motor 33 operates still at a low voltage producing a torque, which is equal to the load torque of the second propeller 35. The torque of the electric motor 33 has to be increased when the speed of the electric motor 33 increases in order to be able to overcome the load torque of the second propeller 35.

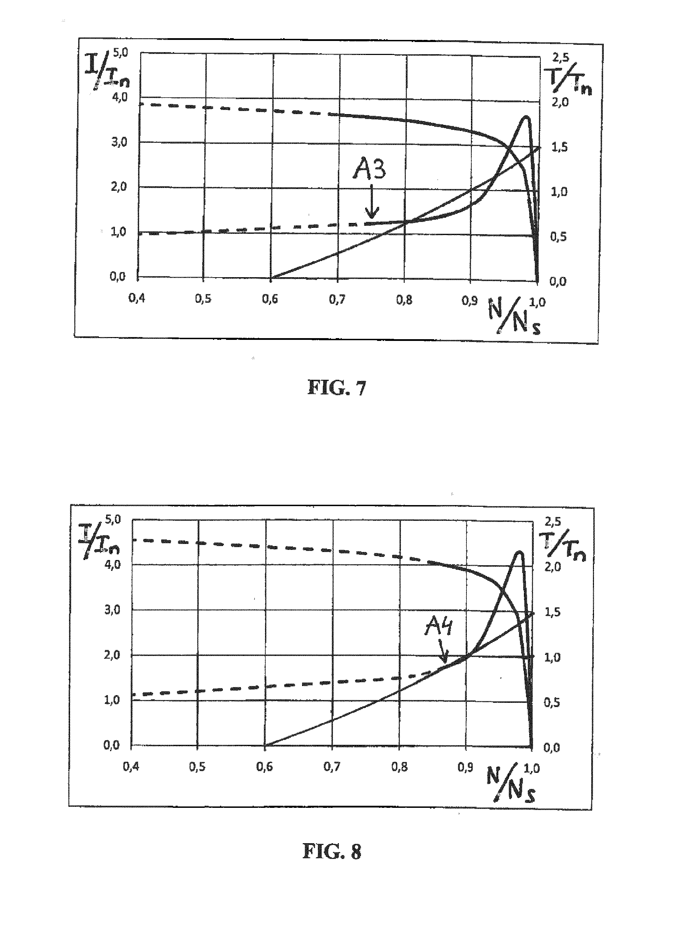

At point A3 in figure 7 the excitation 40 of the generator 20 is increased to a point where the electric motor 33 torque exceeds the load torque of the second propeller 35. The electric motor 33 will accelerate in this situation where the electric motor 33 torque is higher than the load torque of the second propeller 35.

At point A4 in figure in figure 8 the excitation 40 of the generator 20 is continuously controlled in order to keep the voltage and thereby the current and thereby the torque and thereby the acceleration of the electric motor 33 at a predetermined value.

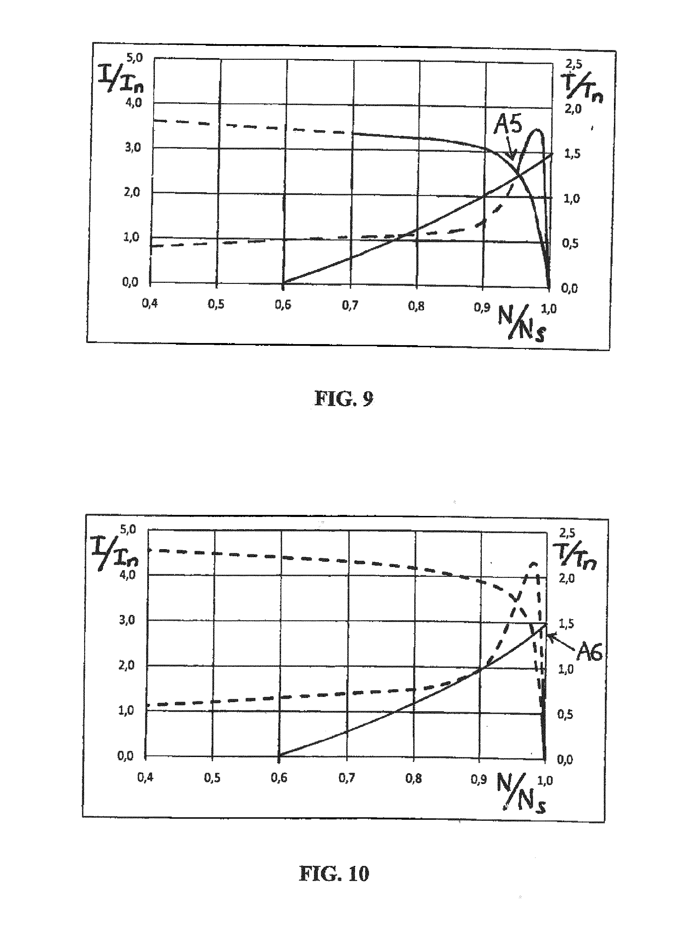

At point A5 in figure 9 the electric motor 33 torque increases rapidly with speed. There might at this point be a need to limit the acceleration by reducing the generator excitation temporarily. Also the current may be controlled by the generator 20 excitation 40 to some extent, but the torque of the electric motor 33 must be kept at a sufficient level above the load torque of the second propeller 35.

At point A6 in figure 10 the electric motor 33 operates nearly at the synchronous speed and nominal voltage. The starting procedure is over and the electric motor 33 as well as the second propeller 35 follows the speed of the main propeller 12 automatically.

After this when the starting procedure is over, the speed of the first main propeller 12 can be accelerated to its nominal speed and also the speed of the second propeller is then accelerated to its nominal speed.

The rotation speed of the first main propeller 12 and the rotation speed of the second propeller 35 are different. This is achieved e.g. by having different pole numbers in the generator 20 and the motor 33. The generator 20 could e.g. be a 12-pole generator and the electric motor 33 a 10-pole electric motor. In a situation where the main engine 10 rotates at a speed of 100 rpm i.e. the generator 20 being directly connected to the shaft 11 of the main engine 10 will also rotate at the same rotation speed of 100 rpm. The electric motor 33 will in this situation rotate at the speed of 120 rpm. The ratio between the rotation speed of the first main propeller 12 and the rotation speed of the second propeller 35 is kept constant in normal operation when the second propeller 35 is driven by the electric motor 33. The diameter of the fist main propeller 12 is also normally bigger than the diameter of the second propeller 35.

The first main propeller 12 and the second propeller 35 are both so called fix pitch propellers i.e. the blades of the propellers 12, 35 are not adjustable.

The main engine is advantageously a slow-speed, two-stroke diesel engine having a power of at least 2MW. The power of the main engine 10 is consumed in the first main propeller 12 and the generator 20. The power of the first main propeller 12 is at least 1 MW and the power of the second propeller 35 is also at least 1 MW. The power of the generator 20 and the electric motor 33 is the same e.g. at least 1 MW. The generator 20 is only supplying power to the electric motor 33.

The control circuit 60 can be a separate control circuit or it can be integrated e.g. into the overall propulsion control of the whole system.

Once the electric motor 33 has been started and it is running at steady state speed, then the excitation circuit 40 controls the voltage U of the electric motor 33. The load torque depends of the rotation speed or some outside factor. The relation between a change in the voltage supplied to the electric motor 33 and the capacity of the electric motor 33 to produce torque is a squared relation. The torque of the electric motor 33 sets at the same level as the torque of the load and the electric motor 33 takes the current from the network that is needed to produce said torque.

It is necessary to measure the rotation speed N and the voltage U of the electric motor 33 in order to be able to control the start up of the electric motor 33. The current I of the electric motor 33 is estimated based on the calculation of the torque T.

The switch 21 in the electric network 22 is not a necessary element in order to realize the invention. The switch 21 is rather a protection in order to prevent current to be fed to the electric motor 33 by the residual magnetization in a situation when current should not be fed to the electric motor 33.

The start up of the electric motor 33 can be done at different speeds of the main engine 10. The examples show a start up procedure in a situation where the main engine 10 rotates at nominal speed. The load torque of the second propeller 35 is naturally dependent on the actual rotation speed of the first main propeller 12. The load torque of the second propeller 35 is naturally higher when the main engine 10 rotates at nominal speed compared to the situation when the main engine 10 rotates at a speed e.g. 70% of the nominal speed.

The examples of the embodiments of the present invention presented above are not intended to limit the scope of the invention only to these embodiments. Several modifications can be made to the invention within the scope of the claims.

## Claims

1. A system for starting a motor in a propulsion unit, said system comprising:
- a main engine (10),
- a first main propeller (12) driven by the main engine (10),
- a generator (20) driven by the main engine (10),
- an excitation circuit (40) controlling the generator (20),
- a propulsion unit (30) comprising an electric motor (33) and a second, contra-rotating propeller (35) driven by the electric motor (33),
- an electric network (22) connecting the electric motor (33) and the generator (20), and
**characterized in that** the system further comprises:
- a control circuit (60) controlling the excitation circuit (40) during start up of the electric motor (33), said control circuit (60) receiving as input signals at least the rotation speed (N) and the voltage (U) of the electric motor (33),
- whereby the control circuit (60) further calculates the torque (T) of the electric motor (33) based on the measured rotation speed (N) and the voltage (U) and regulates continuously the excitation circuit (40) in order to supply a voltage (U), which is under the nominal voltage, to the electric motor (33) during the start up procedure.

2. A system according to claim 1, **characterized in that** the first main propeller (12) and the generator (20) are connected directly to the first main shaft (11) of the main engine (10).

3. A system according to claim 1 or 2, **characterized in that** the second propeller (35) is connected directly via a second shaft (34) to the rotor of the electric motor (33).

4. A system according to any of claims 1 to 3, **characterized in that** the first main propeller (12) and the second propeller (35) are both so called fix pitch propellers i.e. the blades of the propellers (12, 35) are not adjustable.

5. A system according to any of claims 1 to 4, **characterized in that** the control circuit 60 is a separate control circuit.

6. A system according to any of claims 1 to 4, **characterized in that** the control circuit (60) is integrated into an overall propulsion control system.

7. A method for starting a motor in a propulsion unit in a system comprising:
- a main engine (10),
- a first main propeller (12) driven by the main engine (10),
- a generator (20) driven by the main engine (10),
- an excitation circuit (40) controlling the generator (20),
- a propulsion unit (30) comprising an electric motor (33) and a second, contra- rotating propeller (35) being driven by the electric motor (33),
- an electric network (22) connecting the generator (20) with the electric motor (33), and **characterized in that** the method comprises the steps of:
- controlling the excitation circuit (40) with a control circuit (60) during start up of the electric motor (33),
- measuring at least the rotation speed (N) and the voltage (U) of the electric motor (33),
- feeding the measured rotation speed (N) and the measured voltage (U) of the electric motor (33) as input signals to the control circuit (60),
- calculating the torque (T) of the electric motor (33) in the control circuit (60) based on the measured rotation speed (N) and the measured voltage (U),
- regulating the excitation circuit (40) continuously during start up of the electric motor (33) with the control circuit (60) in order to supply a voltage (U), which is under the nominal voltage, to the electric motor (33) during the start up procedure.

8. A method according to claim 7, **characterized in** limiting the acceleration of the electric motor (33) during the start up procedure of the electric motor (33) by limiting the voltage (U) supplied to the electric motor (33).

## Patentansprüche

1. System zum Starten eines Motors in einer Antriebseinheit, wobei das System umfasst:
- einen Hauptmotor (10),
- einen ersten Hauptpropeller (12), der vom Hauptmotor (10) angetrieben wird,
- einen Generator (20), der vom Hauptmotor (10) angetrieben wird,
- einen Erregerstromkreis (40), der den Generator (20) steuert,
- eine Antriebseinheit (30) mit einem Elektromotor (33) und einem zweiten, gegenläufigen Propeller (35), der vom Elektromotor (33) angetrieben wird,
- ein elektrisches Netz (22), das den Elektromotor (33) und den Generator (20) verbindet, und
**dadurch gekennzeichnet, dass** das System ferner umfasst:
- einen Steuerstromkreis (60), der den Erregerstromkreis (40) während des Startens des Elektromotors (33) steuert, wobei der Steuerstromkreis (60) zumindest die Drehzahl (N) und die Spannung (U) des Elektromotors (33) als Eingangssignale empfängt,
- wobei der Steuerstromkreis (60) darüber hinaus das Drehmoment (T) des Elektromotors (33) basierend auf der gemessenen Drehzahl (N) und der Spannung (U) berechnet und kontinuierlich den Erregerstromkreis (40) regelt, um während des Startvorgangs den Elektromotor (33) mit einer Spannung (U), die unter der Nennspannung liegt, zu versorgen.

2. System nach Anspruch 1, **dadurch gekennzeichnet, dass** der erste Hauptpropeller (12) und der Generator (20) direkt mit der ersten Hauptwelle (11) des Hauptmotors (10) verbunden sind.

3. System nach Anspruch 1 oder 2, **dadurch gekennzeichnet, dass** der zweite Propeller (35) direkt über eine zweite Welle (34) mit dem Rotor des Elektromotors (33) verbunden ist.

4. System nach einem der Ansprüche 1 bis 3, **dadurch gekennzeichnet, dass** der erste Hauptpropeller (12) und der zweite Propeller (35) beide sogenannte Festpropeller sind, d. h. die Schaufeln der Propeller (12, 35) nicht verstellbar sind.

5. System nach einem der Ansprüche 1 bis 4, **dadurch gekennzeichnet, dass** der Steuerstromkreis (60) ein separater Steuerstromkreis ist.

6. System nach einem der Ansprüche 1 bis 4, **dadurch gekennzeichnet, dass** der Steuerstromkreis (60) in ein Gesamtantriebssteuersystem integriert ist.

7. Verfahren zum Starten eines Motors in einer Antriebseinheit in einem System, umfassend:
- einen Hauptmotor (10),
- einen ersten Hauptpropeller (12), der vom Hauptmotor (10) angetrieben wird,
- einen Generator (20), der vom Hauptmotor (10) angetrieben wird,
- einen Erregerstromkreis (40), der den Generator (20) steuert,
- eine Antriebseinheit (30) mit einem Elektromotor (33) und einem zweiten, gegenläufigen Propeller (35), der vom Elektromotor (33) angetrieben wird,
- ein elektrisches Netz (22), das den Elektromotor (33) und den Generator (20) verbindet, und
**dadurch gekennzeichnet, dass** das Verfahren die folgenden Schritte umfasst:
- Steuern des Erregerstromkreises (40) mit einem Steuerstromkreis (60) während des Startens des Elektromotors (33),
- Messen zumindest der Drehzahl (N) und der Spannung (U) des Elektromotors (33),
- Zuführen der gemessenen Drehzahl (N) und der gemessenen Spannung (U) des Elektromotors (33) als Eingangssignale an den Steuerstromkreis (60),
- Berechnen des Drehmoments (T) des Elektromotors (33) in dem Steuerstromkreis (60) basierend auf der gemessenen Drehzahl (N) und der gemessenen Spannung (U),
- Regeln des Erregerstromkreises (40) kontinuierlich während des Startens des Elektromotors (33) mit dem Steuerstromkreis (60), um während des Startvorgangs den Elektromotor (33) mit einer Spannung (U), die unter der Nennspannung liegt, zu versorgen.

8. Verfahren nach Anspruch 7, **gekennzeichnet durch** Begrenzen der Beschleunigung des Elektromotors (33) während des Startvorgangs des Elektromotors (33) durch Begrenzen der an den Elektromotor (33) angelegten Spannung (U).

## Revendications

1. Système de démarrage d'un moteur dans une unité de propulsion, ledit système comprenant :
- un moteur principal (10),
- une première hélice principale (12) entraînée par le moteur principal (10),
- un générateur (20) entraîné par le moteur principal (10),
- un circuit d'excitation (40) commandant le générateur (20),
- une unité de propulsion (30) comprenant un moteur électrique (33) et une seconde hélice contrarotative (35) entraînée par le moteur électrique (33),
- un réseau électrique (22) reliant le moteur électrique (33) et le générateur (20), et
**caractérisé en ce que** le système comprend en outre:
- un circuit de commande (60) commandant le circuit d'excitation (40) pendant le démarrage du moteur électrique (33), ledit circuit de commande (60) recevant comme signaux d'entrée au moins la vitesse de rotation (N) et la tension (U) du moteur électrique (33),
- le circuit de commande (60) calculant en outre le couple (T) du moteur électrique (33) sur la base de la vitesse de rotation mesurée (N) et de la tension (U) et régule en permanence le circuit d'excitation (40) afin de fournir une tension (U), qui est inférieure à la tension nominale, au moteur électrique (33) pendant la procédure de démarrage.

2. Système selon la revendication 1, **caractérisé en ce que** la première hélice principale (12) et le générateur (20) sont reliés directement au premier arbre principal (11) du moteur principal (10).

3. Système selon la revendication 1 ou 2, **caractérisé en ce que** la seconde hélice (35) est reliée directement par l'intermédiaire d'un second arbre (34) au rotor du moteur électrique (33).

4. Système selon l'une quelconque des revendications 1 à 3, **caractérisé en ce que** la première hélice principale (12) et la seconde hélice (35) sont toutes les deux appelées hélices à pas fixe, c'est-à-dire que les pales des hélices (12, 35) ne sont pas réglables.

5. Système selon l'une quelconque des revendications 1 à 4, **caractérisé en ce que** le circuit de commande 60 est un circuit de commande séparé.

6. Système selon l'une quelconque des revendications 1 à 4, **caractérisé en ce que** le circuit de commande (60) est intégré dans un système global de contrôle de la propulsion.

7. Procédé de démarrage d'un moteur dans une unité de propulsion d'un système comprenant :
- un moteur principal (10),
- une première hélice principale (12) entraînée par le moteur principal (10),
- un générateur (20) entraîné par le moteur principal (10),
- un circuit d'excitation (40) commandant le générateur (20),
- une unité de propulsion (30) comprenant un moteur électrique (33) et une seconde hélice contrarotative (35) entraînée par le moteur électrique (33),
- un réseau électrique (22) reliant le moteur électrique (33) et le générateur (20), et
**caractérisé en ce que** le procédé comprend les étapes consistant à:
- commander le circuit d'excitation (40) avec un circuit de commande (60) pendant le démarrage du moteur électrique (33),
- mesurer au moins la vitesse de rotation (N) et la tension (U) du moteur électrique (33),
- amener la vitesse de rotation mesurée (N) et la tension mesurée (U) du moteur électrique (33) en tant que signaux d'entrée vers le circuit de commande (60),
- calculer le couple (T) du moteur électrique (33) dans le circuit de commande (60) sur la base de la vitesse de rotation mesurée (N) et de la tension mesurée (U),
- réguler le circuit d'excitation (40) en continu pendant le démarrage du moteur électrique (33) avec le circuit de commande (60) afin de fournir une tension (U), qui est inférieure à la tension nominale, au moteur électrique (33) au cours de la procédure de démarrage.

8. Procédé selon la revendication 7, **caractérisé en ce qu'**il limite l'accélération du moteur électrique (33) pendant la procédure de démarrage du moteur électrique (33) en limitant la tension (U) appliquée au moteur électrique (33).
